# EUROPÄISCHE PATENTSCHRIFT

(11) **EP 1 965 482 B1**
(45) Veröffentlichungstag und Bekanntmachung des Hinweises auf die Patenterteilung: **30.06.2010**
(21) Anmeldenummer: 07004075.3
(22) Anmeldetag: 27.02.2007
(51) Int. Cl.: H02H 9/00, H04L 25/02

(54) **ASI-Netzwerk für explosionsgefährdete Bereiche**
ASI network for areas subject to explosive risk
Réseau ASI pour des zones en danger d'explosion

(43) Veröffentlichungstag der Anmeldung: 03.09.2008
(73) Patentinhaber: SIEMENS AKTIENGESELLSCHAFT, 80333 München (DE)
(72) Erfinder: Indefrey, Klaus, 90489 Nürnberg (DE); Korff, Maximilian, 90562 Kalchreuth (DE); Schiff, Andreas, Dr., 88097 Eriskirch (DE); Wiesgickl, Bernhard, 92249 Vilseck (DE)

(56) Entgegenhaltungen:
- EP-A2- 0 355 532
- WO-A-99/45621

## Beschreibung

Die Erfindung betrifft ein ASI-Netzwerk für explosionsgefährdete Bereiche.

Unter dem Begriff ASI-Netzwerk (ASI: Aktuator-Sensor-Interface) wird ein Netzwerk mit einem Bussystem zur Kommunikation zwischen einem Steuergerät(Master) und Feldgeräten (Slaves) verstanden. Ein ASI-Bussystem ist ein bitorientierter Feldbus für die Automation. Er ist optimiert für den Anschluss von einfachen Sensoren, Aktuatoren und Feldgeräten, die nur wenige Informationsbits mit dem Steuergerät austauschen und die über eine im allgemeinen zweiadrige Leitung sowohl die Datenkommunikation durchführen als auch mit elektrischer Energie versorgt werden können.

Um in einem explosionsgefährdeten Bereich elektrische Feldgeräte betreiben zu können, sind Geräte erforderlich, die über eine bestimmte Zündschutzart verfügen, damit von ihnen keine Zündgefahr ausgeht. Besonders vorteilhaft sind Feldgeräte, die eigensicher ausgestaltet sind, da keine zusätzlichen Maßnahmen zur Sicherung des Feldbusses, wie z.B. Kapselungs- und Schirmungsmaßnahmen, benötigt werden, um einen explosionssicheren Betrieb zu gewährleisten.

Bei einem derartigen Feldbussystem ist es im Allgemeinen möglich, eine große Anzahl von Feldgeräten parallel mit den Busleitungen zu verbinden. Jedoch ist es trotz einer eigensicheren Auslegung der Feldgeräte des Feldbusses im explosionsgefährdeten Bereich notwendig, dass die über die Busleitungen zugeführte Energie begrenzt wird, damit auch unter in den Normen festgelegten Fehlerbedingungen an den Busleitungen an keiner Stelle und zu keiner Zeit ein zündfähiger Funke entstehen kann. Die von dem Steuergerät bereitgestellte Energie kann jedoch aufgrund der in dem Feldbussystem nötigen Übertragungsstrecken (Leitungslängen) und den von den einzelnen Feldbusgeräten benötigte Mindestenergie nicht beliebig reduziert werden.

Bekannte Feldbussysteme, die in einem explosionsgefährdeten Bereich eingesetzt werden und die die Zündschutzart "eigensicher" verwenden, begrenzen daher die Länge der Busleitungen des Feldbusses auf eine bestimmte Distanz (z.B. auf 1 km) und die Anzahl der anschließbaren Feldbusgeräte auf ca. 10, weil aufgrund der begrenzten Energieeinspeisung keine größere Anzahl von Feldgeräten versorgt werden kann.

D1 (WO9945621 A) offenbart eine Feldbusanordnung mit einem Feldbusverteiler zur Montage im explosionsgefährdeten Bereich zur Speisung einer Mehrzahl von im explosionsgefährdeten Bereich angeordneten Feldgeräten über eigensichere Stromkreise aus mindestens einer im nicht-explosionsgefährdeten Bereichangeordneten, energiereichen Spannungsquelle. Dazu ist im nicht-explosionsgefährdeten Bereich ein Feldbuskoppler mit drei voneinander galvanisch getrennten Stromkreisen vorgesehen. Über den ersten Stromkreis ist der Feldbuskoppler mit einem im nicht-explosionsgefährdeten Bereich geführten Feldbushauptstrang verbunden. Die Spannungsquelle ist über den zweiten Stromkreis mit dem Feldbuskoppler verbunden. Der dritte Stromkreis ist als nichteigensicherer Stromkreis in den explosionsgefährdeten Bereich geführt.

Es ist daher Aufgabe der vorliegenden Erfindung, ein Feldbussystem zur Verfügung zu stellen, mit dem in einfacher Weise eine beliebige Anzahl von Feldbusgeräten betrieben werden können und bei dem die Länge der Übertragungsstrecke nicht durch die Energieübertragung begrenzt ist.

Diese Aufgabe wird durch das Feldbussystem nach Anspruch 1 gelöst.

Weitere vorteilhafte Ausgestaltungen der Erfindung sind in den abhängigen Ansprüchen angegeben.

Erfindungsgemäß ist ein Feldbussystem vorgesehen, insbesondere zur Verwendung in einem explosionsgefährdeten Bereich, das mehrere Busleitungsabschnitte mit Busleitungen sowie zumindest ein Trennelement umfasst, mit dem jeweils zwei der mehreren Busleitungsabschnitte miteinander gekoppelt sind und das die Busleitungen der zwei Busleitungsabschnitte voneinander galvanisch trennt, so dass ein Fließen eines Gleichstroms zwischen den Busleitungen der zwei Busleitungsabschnitte unterbunden wird und Kommunikationssignale zwischen den zwei Busleitungsabschnitten übertragen werden. Weiterhin umfasst das Feldbussystem eine Versorgungsquelle für jeden der Busleitungsabschnitte, um eine Stromversorgung für an den jeweiligen Busleitungsabschnitt anschließbare Feldgeräte vorzusehen.

Mehrere der Busleitungsabschnitte sind mit Hilfe des zumindest einen Trennelementes zu einer Reiheschaltung verschaltet.

Ein derartiges Feldbussystem hat den Vorteil, dass die auf den Busleitungen maximal zulässige Versorgungsenergie nicht die Anzahl der an dem Feldbussystem betreibbaren Feldgeräte beschränkt. Dazu weist das Feldbussystem mehrere separat voneinander versorgte Busleitungsabschnitte auf, auf denen die jeweils auf den Busleitungen maximal zulässige Versorgungsenergie nicht überschreiten. Somit kann durch Verwenden mehrerer Busleitungsabschnitte die gesamte Versorgungsenergie erhöht werden und dadurch eine nicht durch die Versorgung beschränkte Anzahl von Feldgeräten betrieben werden.

Die Busleitung ist vorzugsweise an den Busleitungsabschnitten, die ein offenes Ende aufweisen, mit einer Abschlussimpedanz versehen. Bei diesen Busleitungsabschnitten handelt es sich in der Regel um solche Abschnitte, die sich am Anfang und am Ende der Busleitung befinden.

Weiterhin kann mindestens einer der Busleitungsabschnitte, dessen Busleitungen ein offenes Ende aufweisen, mit einer Abschlussimpedanz versehen sein.

Das Trennelement kann mit jeweils zwei Busleitungen der zwei Busleitungsabschnitte verbunden sein, wobei das Trennelement einen Transformator mit Transformatorspulen umfasst, und wobei jede der Transformatorspulen in Reihe mit einer jeweiligen Trennkapazität zwischen den zwei Busleitungen des entsprechenden Busleitungsabschnittes geschaltet ist.

Vorzugsweise ist eine Suppressordiode unmittelbar parallel zu mindestens einer der Transformatorspulen des Transformators geschaltet.

Die Versorgungsquellen für die Busleitungsabschnitte können strom- und spannungsbegrenzt ausgebildet sein.

Die Versorgungsquellen sind vorzugsweise jeweils über eine Entkopplungsinduktivität mit jeder der Busleitungen des entsprechenden Busleitungsabschnittes gekoppelt.

Die Busleitungsabschnitte sind vorzugsweise zumindest teilweise in einem explosionsgefährdeten Bereich angeordnet, wobei die Versorgungsquellen für die Busleitungsabschnitte außerhalb des explosionsgefährdeten Bereichs angeordnet sind.

Weiterhin kann mindestens einer der Busleitungsabschnitte über einen Verbindungsabschnitt mit einem Steuergerät zum Durchführen einer Kommunikation mit an den Busleitungsabschnitten angeschlossenen Feldgeräten verbunden sein.

Vorzugsweise sind an den Verbindungsabschnitt mehrere Busleitungsabschnitte über ein jeweiliges Trennelement gekoppelt.

Bevorzugte Ausführungsformen der Erfindung werden nachfolgend anhand der beigefügten Zeichnungen näher erläutert. Es zeigen:
- FIG 1: ein Feldbussystem für die Verwendung in einem explosionsgefährdeten Bereich, wobei die Feldbusgeräte eigensicher ausgebildet sind;
- FIG 2: ein Feldbussystem gemäß einer ersten Ausführungsform der Erfindung;
- FIG 3: eine detaillierte Darstellung der Stromversorgung eines Busleitungsabschnittes sowie eine Realisierung der galvanischen Entkopplung zwischen den Busleitungsabschnitten;
- FIG 4: ein Feldbussystem gemäß einer zweiten Ausführungsform der Erfindung.

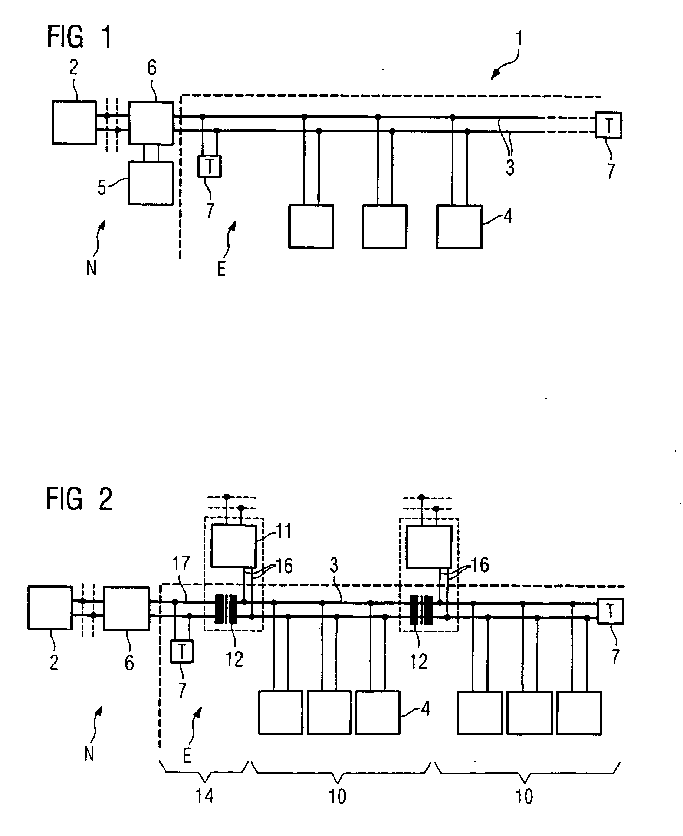

In FIG 1 ist ein herkömmliches Feldbussystem für den Einsatz in einem explosionsgefährdeten Bereich dargestellt. Das Feldbussystem umfasst ein herkömmliches Steuergerät 2 für ein herkömmliches Feldbussystem. Das Steuergerät 2 ist vorzugsweise in einem nicht explosionsgefährdeten Bereich N angeordnet. Bei dem in FIG 1 dargestellten Feldbussystem werden Kommunikationssignale und die Energieversorgung gemeinsam über zwei Busleitungen 3 an in einem explosionsgefährdeten Bereich E befindliche Feldgeräte 4 geführt. Da von dem Steuergerät 2 üblicherweise nur die Datenkommunikation mit den Feldgeräten 4 zur Verfügung gestellt wird, ist in dem nicht explosionsgefährdeten Bereich N weiterhin eine Versorgungsquelle 5 vorgesehen, die eine Stromversorgung bereitstellt, um elektrische Energie mit Hilfe eines geeigneten Kopplers 6 auf die Busleitungen 3 einzukoppeln. Die elektrische Energie wird über die Busleitungen 3 in den explosionsgefährdeten Bereich E geführt, so dass die Feldgeräte 4 die elektrische Energie von den Busleitungen 3 abgreifen können. Zur Vermeidung von Signalreflexionen auf den Busleitungen 3 sind weiterhin Abschlussimpedanzen 7 an den Enden der Busleitungen 3 vorgesehen.

Im explosionsgefährdeten Bereich E darf über die Busleitungen 3 nur eine begrenzte Energiemenge übertragen werden, um bei Auftreten einer Störung das Auftreten eines Zündfunkens zu vermeiden. Daher darf die Stromversorgung 5 nur eine sehr begrenzte Energie in die Busleitungen einkoppeln, wodurch die Anzahl der an den Busleitungen 3 im explosionsgefährdeten Bereich E betreibbaren Feldgeräte 4 und auch die Leitungslänge zwischen der Stromversorgung 5 und den einzelnen Feldgeräten erheblich begrenzt ist.

In FIG 2 ist ein Feldbussystem gemäß einer ersten Ausführungsform der Erfindung dargestellt. Gleiche Bezugszeichen entsprechen in dieser und in den weiteren beschriebenen Ausführungsformen Elementen gleicher oder vergleichbarer Funktion.

Beim Feldbussystem der FIG 2 ist das Steuergerät 2 ebenso wie bei dem herkömmlichen Feldbussystem, das in FIG 1 gezeigt ist, außerhalb des explosionsgefährdeten Bereichs im nichtexplosionsgefährdeten Bereich N angeordnet und über den Koppler 6 mit dem in dem explosionsgefährdeten Bereich befindlichen Teil des Feldbussystem verbunden. Das Feldbussystem weist Busleitungsabschnitte 10 auf, die innerhalb des explosionsgefährdeten Bereichs E angeordnet sind, jedoch auch außerhalb des explosionsgefährdeten Bereichs E vorgesehen sein können. In den Busleitungsabschnitten 10 können jeweils eine Anzahl von Feldgeräten 4 mit den Busleitungen 3 des jeweiligen Busleitungsabschnittes 10 verbunden werden.

Die Busleitungen 3 jeder der Busleitungsabschnitte 10 sind mit einer eigenen Versorgungsquelle 11 verbunden, die für den jeweiligen Busleitungsabschnitt 10 bzw. die daran angeschlossenen Feldgeräte 4 eine unabhängige Stromversorgung bereitstellt. Die Versorgungsquelle 11 ist vorzugsweise zum Bereitstellen einer Stromversorgung für mehrere Feldgeräte 4 vorgesehen, kann jedoch auch für die Versorgung nur eines Feldgerätes 4 vorgesehen sein. Die Busleitungsabschnitte 10 sind voneinander galvanisch durch ein Trennelement 12 getrennt, d.h. die Busleitungen 3 verschiedener Busleitungsabschnitte 10 weisen untereinander keine elektrische Verbindung auf, über die ein Gleichstrom fließen kann. Das Trennelement 12 ist jedoch ausgebildet, um die elektrischen Kommunikationssignale zwischen den Busleitungen 3 von über das Trennelement 12 getrennten Busleitungsabschnitten 10 zu übertragen.

Auch ist zwischen dem ersten Busleitungsabschnitt 10 und dem Koppler 6 ein Verbindungsabschnitt 14 vorgesehen. Der Verbindungsabschnitt 14 entspricht im Wesentlichen einem Busleitungsabschnitt, an den keine Versorgungsquelle und kein Feldgerät angeschlossen sind und der lediglich der Signalübertragung zwischen dem explosionsgefährdeten Bereich und dem nicht explosionsgefährdeten Bereich dient. Der Verbindungsabschnitt 14 und der erste Busleitungsabschnitt 10 sind ebenfalls galvanisch in der oben beschriebenen Weise durch ein entsprechendes Trennelement 12 getrennt.

Die Versorgungsquellen 11 stellen also für jeden der Busleitungsabschnitte 10 bzw. den daran angeschlossenen Feldgeräten 4 eine eigene separate Stromversorgung zur Verfügung, so dass die gesamte Versorgungsenergie, die insgesamt den Feldgeräten 4 des Feldbusses bereitgestellt wird, ein Mehrfaches der Versorgungsenergie beträgt, die ansonsten von nur einer Versorgungsquelle 11 für den Betrieb von Feldgeräten 4 in dem explosionsgefährdeten Bereich E zur Verfügung gestellt werden könnte.

Die Anzahl der Feldgeräte 4, die an einem der Busleitungsabschnitte 10 angeordnet werden können, und die Leitungslänge des entsprechenden Busleitungsabschnittes 10 sind auf die maximal zulässige Versorgungsenergie der Versorgungsquelle 11 angepasst. Die maximal zulässige Versorgungsenergie ist durch Vorgaben für explosionsgefährdete Bereiche festgelegt. Da die Busleitungsabschnitte 10 voneinander galvanisch getrennt sind, kann somit in jedem der Busleitungsabschnitte 10 die Versorgungsenergie auf die Energie, die durch die Versorgungsquelle 11 bereitgestellt wird, begrenzt werden. Jedoch ist die Gesamtlänge des Feldbusses mit mehreren Busleitungsabschnitten und die Anzahl der anschließbaren Feldgeräte 4 nicht durch die Vorgaben für die Versorgungsenergie für eine der Versorgungsquellen 11 beschränkt, da im wesentlichen eine beliebige Anzahl von galvanisch voneinander getrennten Busleitungsabschnitten 10 mit jeweiligen Versorgungsquellen 11 miteinander zu dem Feldbussystem 1 verbunden werden können.

Im in FIG 2 gezeigten Ausführungsbeispiel sind die Busleitungsabschnitte 10 als Kette verschaltet, d.h. nacheinander in Reihe geschaltet, und jeweils durch ein Trennelement 12 verbunden, wobei der letzte Busleitungsabschnitt 10 mit einer Abschlussimpedanz 7 versehen ist, um störende Reflexionen der Kommunikationssignale zu vermeiden.

Auf gleiche Weise ist der Verbindungsabschnitt 14, der den Koppler 6 im nicht explosionsgefährdeten Bereich N mit einem ersten Trennelement 12 verbindet, ebenfalls mit einer Abschlussimpedanz 7 versehen, um Signalreflexionen an dem Koppler 6 zu vermeiden.

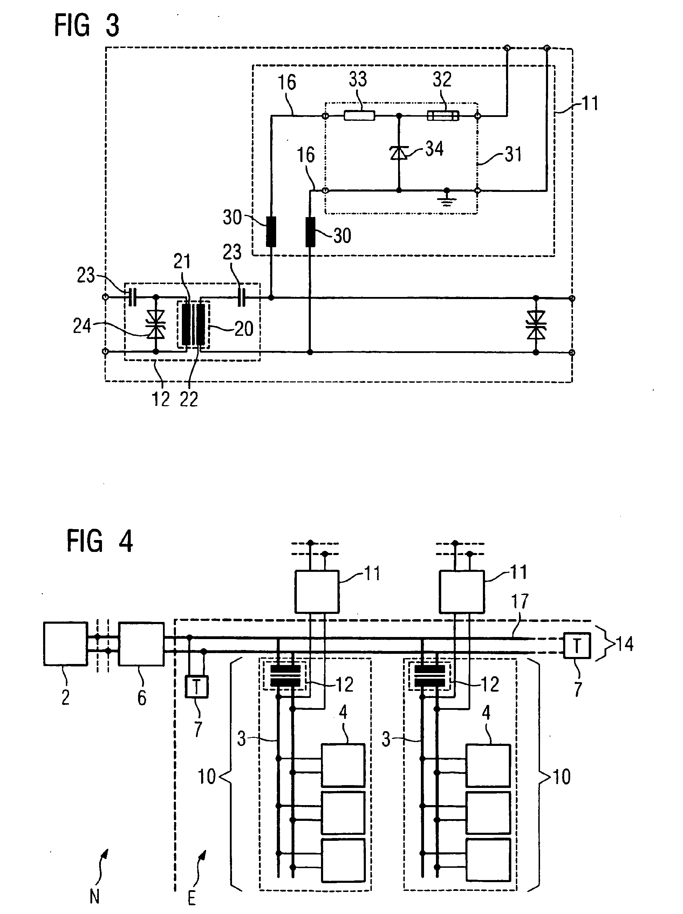

Eine detaillierte Darstellung der Stromversorgung 11 und des Trennelementes 12 ist in FIG 3 dargestellt. Das o.a. Trennelement 12 umfasst einen Transformator 20, um Kommunikationssignale zwischen den Busleitungen 3 von zwei über das Trennelement 12 miteinander verbundenen Busleitungsabschnitten 10 zu übertragen. Damit über Transformatorspulen 21 bzw. 22 des Transformators 20 zwischen den beiden Busleitungen eines Busleitungsabschnittes 10 kein Kurzschlussstrom fließen kann (Gleichstrom), ist in Reihe mit jeder der Transformatorspulen 21, 22 eine Trennkapazität 23 geschaltet, die einen Hochpassfilter bildet, und die die beiden Busleitungen 3 eines Busleitungsabschnittes 10 voneinander galvanisch trennt, d.h. ein Fließen eines Gleichstromes unterbindet.

Weiterhin ist jedes der Trennelemente 12 mit mindestens einer Suppressordiode 24 versehen, die zwischen die beiden Busleitungen 3 eines Busleitungsabschnittes 10 geschaltet ist. Vorzugsweise ist die Suppressordiode 24 mit einem Anschluss zwischen der Trennkapazität 23 und einem Anschluss der in Reihe geschalteten Transformatorspule 21, 22 und mit einem weiteren Anschluss an einen weiteren Anschluss der entsprechenden Transformatorspule 21, 22 angeschlossen. Bei der Gesamtanordnung sind die Trennelemente 12 so zwischen den Busleitungsabschnitten 10 angeordnet, dass zwischen den Busleitungen 3 jedes Busleitungsabschnittes 10 mindestens eine Suppressordiode 24 angeordnet ist. Die Suppressordiode 24 ist aufgrund einer Vorgabe für die Sicherheit bei explosionsgefährdeten Bereichen notwendig, und dient dazu, Überspannungen auf den Busleitungen 3 zu begrenzen.

Die Versorgungsquelle 11 für jeden Busleitungsabschnitt 10 ist vorzugsweise außerhalb des explosionsgefährdeten Bereichs E vorgesehen, kann jedoch bei entsprechend sicherer Ausführung zumindest teilweise auch in dem explosionsgefährdeten Bereich E angeordnet sein. Die Versorgungsquelle 11 ist über Entkopplungsinduktivitäten 30, die als Tiefpassfilter für die auf den Busleitungen 3 befindlichen Kommunikationssignale dienen und eine Übertragung von Signalen in Richtung der Versorgungsquelle 11 unterbinden sollen, mit jeder der Busleitungen 3 jedes Busleitungsabschnittes 10 verbunden.

Die Versorgungsquellen 11 umfassen eine Schutzschaltung 31, die eine Sicherung 32, wie z.B. eine Drahtsicherung, zum Begrenzen des Stromflusses auf die entsprechenden Busleitungen 3 des Busleitungsabschnittes 10 aufweist. Darüber hinaus ist noch ein dazu in Reihe geschalteter Widerstand zum Begrenzen des auf die Busleitung 3 des entsprechenden Busleitungsabschnittes 10 fließenden Stroms vorgesehen. Zwischen dem Widerstand 33 und der Sicherung 32 ist zwischen beiden Versorgungsleitungen 16, über die die Versorgungsquelle 11 mit den Busleitungen 3 verbunden sind, eine Zener-Diode 34 angeordnet, die die Spannung zwischen den Versorgungsleitungen 16 auf einen von der Zener-Diode vorgegebenen Spannungswert begrenzt.

Durch die Schutzschaltung 31 als Teil der Versorgungsquelle 11 kann sowohl die Spannung als auch der Strom, der dem Busleitungsabschnitt 10 zugeführt wird, begrenzt werden, so dass z.B. die Versorgungsquelle 11 bei einem Fehler nur eine geringere Energie freisetzen kann, die z.B. geringer ist als eine Zündenergie für ein möglicherweise im explosionsgefährdeten Bereich befindliches Gasgemisch.

Während bei der Ausführungsform der FIG 2 der Verbindungsabschnitt 14 mit den entsprechenden Verbindungsleitungen 17 über ein Trennelement 12 mit einem der Busleitungsabschnitte in geeigneter Weise gekoppelt ist, ist bei der Ausführungsform der FIG 4 vorgesehen, den Verbindungsabschnitt 14, der lediglich für die Signalübertragung und nicht für die Übertragung der Versorgungsenergie zwischen dem Feldbussystem und dem Steuergerät 2 verwendet wird, dazu zu verwenden, die Kommunikation mit mehreren einzelnen Gruppen von einem oder mehreren Busleitungsabschnitten 10 mit jeweils einer Anzahl von Feldgeräten 4 bereitzustellen. D.h. an dem Verbindungsabschnitt 14 sind mehrere über entsprechende Trennelemente 12 verbundene Busleitungsabschnitte 10 parallel angeschlossen.

Somit kann der Verbindungsabschnitt 14 dafür vorgesehen werden, ein Großteil der Entfernung zwischen dem der Steuerung und den Feldgeräten 4 einer Gruppe von Busleitungsabschnitten zu überbrücken, wobei die einzelnen Gruppen mit den Verbindungsleitungen 17 des Verbindungsabschnittes über entsprechende Trennelemente 12 angeschlossen sind.

Eine solche Anordnung hat den Vorteil, dass über einen großen Bereich im explosionsgefährdeten Bereich über die Busleitungen keine Versorgungsenergie übertragen wird, wodurch das Risiko weiter reduziert werden kann. Die Verbindungsleitungen 17 des Verbindungsabschnittes 14 sind jeweils an beiden Enden mit Abschlussimpedanzen 7 versehen. Die dem Trennelement 12 gegenüberliegenden Enden der Busleitungsabschnitte 10 benötigen in der Regel keine Abschlussimpedanz, wenn diese in ihrer Länge entsprechend begrenzt sind, z.B. auf maximal 50 m. Dagegen kann die Länge der Verbindungsleitungen 17 des Verbindungsabschnittes 14 wie bei einem herkömmlichen Feldbussystem üblich, bis zu 2000 m betragen, da die Länge nicht durch Einschränkungen aufgrund einer Versorgungsenergieübertragung in einem explosionsgefährdeten Bereich beschränkt ist.

Im Prinzip können sowohl der Verbindungsabschnitt 14 als auch jeder der Busleitungsabschnitte 10 mit einem oder mehreren weiteren Busleitungsabschnitten 10 mit Hilfe eines oder mehrere entsprechende Trennelemente 12 gekoppelt sein.

## Patentansprüche

1. Feldbussystem, insbesondere zur Verwendung in einem explosionsgefährdeten Bereich, umfassend:
- mehrere Busleitungsabschnitte (10) mit Busleitungen (3);
- zumindest ein Trennelement (12), mit dem jeweils zwei der mehreren Busleitungsabschnitte (10) miteinander gekoppelt sind und das die Busleitungen der zwei Busleitungsabschnitte (10) voneinander galvanisch trennt, so dass ein Fließen eines Gleichstroms zwischen den Busleitungen (3) der zwei Busleitungsabschnitte (10) unterbunden wird und Kommunikationssignale zwischen den zwei Busleitungsabschnitten (10) übertragen werden; und
- eine Versorgungsquelle (11) für jeden der Busleitungsabschnitte (10), um eine Stromversorgung für an den jeweiligen Busleitungsabschnitt (10) anschließbare Feldgeräte (4) vorzusehen,
wobei mehrere der Busleitungsabschnitte (10) mit Hilfe des zumindest einen Trennelements (12) zu einer Reihenschaltung verschaltet sind.

2. Feldbussystem nach Anspruch 1, wobei an den Enden der Busleitungen (3) Abschlussimpedanzen (7) vorgesehen sind.

3. Feldbussystem nach Anspruch 1 oder 2, wobei das Trennelement (12) mit jeweils zwei Busleitungen (3) der zwei Busleitungsabschnitte (10) verbunden ist, wobei das Trennelement (12) einen Transformator (20) mit Transformatorspulen (21, 22) umfasst, wobei jede der Transformatorspulen (21, 22) in Reihe mit einer jeweiligen Trennkapazität (23) zwischen den zwei Busleitungen (3) des entsprechenden Busleitungsabschnittes (10) geschaltet ist.

4. Feldbussystem nach Anspruch 3, wobei eine Suppressordiode unmittelbar parallel zu mindestens einer der Transformatorspulen (21, 22) des Transformators (20) geschaltet ist.

5. Feldbussystem nach einem der Ansprüche 1 bis 4, wobei die Versorgungsquellen (11) für die Busleitungsabschnitte (10) strom- und spannungsbegrenzt ausgebildet sind.

6. Feldbussystem nach einem der Ansprüche 1 bis 5, wobei eine oder mehrere der Versorgungsquellen (11) jeweils über eine Entkopplungsinduktivität (30) mit jeder der Busleitungen des entsprechenden Busleitungsabschnittes (10) gekoppelt sind.

7. Feldbussystem nach einem der Ansprüche 1 bis 6, wobei die Busleitungsabschnitte (10) zumindest teilweise in einem explosionsgefährdeten Bereich angeordnet sind, wobei die Versorgungsquellen (11) für die Busleitungsabschnitte (10) außerhalb des explosionsgefährdeten Bereichs angeordnet sind.

8. Feldbussystem nach einem der Ansprüche 1 bis 7, wobei mindestens einer der Busleitungsabschnitte (10) über einen Verbindungsabschnitt (14) mit einem Steuergerät (2) zum Durchführen einer Kommunikation mit an den Busleitungsabschnitten (10) angeschlossenen Feldgeräten (4) verbunden ist.

9. Feldbussystem nach Anspruch 8, wobei an den Verbindungsabschnitt (14) mehrere Busleitungsabschnitte (10) über ein jeweiliges Trennelement (12) gekoppelt sind.

## Claims

1. Fieldbus system, in particular for use in an explosion-hazard area, having:
- a plurality of bus line sections (10) with bus lines (3);
- at least one isolating element (12), by means of which in each case two of the plurality of bus line sections (10) are coupled to one another and which galvanically isolates the bus lines of the two bus line sections (10) from one another such that this prevents any direct current flowing between the bus lines (3) of the two bus line sections (10) and communication signals are transmitted between the two bus line sections (10); and
- a supply source (11) for each of the bus line sections (10), in order to provide an electrical power supply for field devices (4) which can be connected to the respective bus line section (10),
wherein a plurality of the bus line sections (10) are connected with the aid of the at least one isolating element (12) to form a series circuit.

2. Fieldbus system according to Claim 1, wherein terminating impedances (7) are provided at the ends of the bus lines (3).

3. Fieldbus system according to Claim 1 or 2, wherein the isolating element (12) is connected to in each case two bus lines (3) of the two bus line sections (10), wherein the isolating element (12) has a transformer (20) with transformer coils (21, 22) and wherein each of the transformer coils (21, 22) is connected in series with a respective isolating capacitance (23) between the two bus lines (3) of the corresponding bus line section (10).

4. Fieldbus system according to Claim 3, wherein a suppressor diode is connected directly in parallel with at least one of the transformer coils (21, 22) of the transformer (20).

5. Fieldbus system according to one of Claims 1 to 4, wherein the supply sources (11) for the bus line sections (10) are designed to be current and voltage limited.

6. Fieldbus system according to one of Claims 1 to 5, wherein one or more of the supply sources (11) is or are each coupled via a decoupling inductance (30) to each of the bus lines of the corresponding bus line section (10).

7. Fieldbus system according to one of Claims 1 to 6, wherein the bus line sections (10) are at least partially arranged in an explosion-hazard area, and wherein the supply sources (11) for the bus line sections (10) are arranged outside the explosion-hazard area.

8. Fieldbus system according to one of Claims 1 to 7, wherein at least one of the bus line sections (10) is connected via a connection section (14) to a controller (2) for providing communication with field devices (4) connected to the bus line sections (10).

9. Fieldbus system according to Claim 8, wherein a plurality of bus line sections (10) are coupled via a respective isolating element (12) to the connection section (14).

## Revendications

1. Système de bus de terrain, à utiliser notamment dans une zone en danger d'explosion, comprenant :
- plusieurs segments ( 10 ) de ligne de bus ayant des lignes ( 3 ) de bus ;
- au moins un élément ( 12 ) de séparation par lequel respectivement deux des plusieurs segments ( 10 ) de ligne de bus sont couplés entre eux et qui sépare galvaniquement l'une de l'autre les lignes de bus des deux segments ( 10 ) de ligne de bus de sorte qu'un flux d'un courant continu entre les lignes ( 3 ) de bus des deux segments ( 10 ) de ligne de bus soit supprimé et que des signaux de communication soient transmis entre les deux segments ( 10 ) de ligne de bus ; et
- une source ( 11 ) d'alimentation pour chacun des segments ( 10 ) de ligne de bus pour prévoir une alimentation en courant d'appareils ( 4 ) de terrain pouvant être raccordés au segment ( 10 ) de ligne de bus respectif,
dans lequel plusieurs des segments ( 10 ) de ligne de bus sont montés à l'aide du au moins un élément ( 12 ) de séparation en un circuit série.

2. Système de bus de terrain suivant la revendication 1, dans lequel il est prévu des impédances ( 7 ) de terminaison aux extrémités des lignes ( 3 ) de bus.

3. Système de bus de terrain suivant la revendication 1 ou 2, dans lequel l'élément ( 12 ) de séparation est relié à respectivement deux lignes ( 3 ) de bus des deux segùents ( 10 ) de ligne de bus, l'éléments ( 12 ) de séparation comprenant un transformateur ( 20 ) ayant des bobines ( 21, 22 ) de transformateur, chacune des bobines ( 21, 22 ) de transformateur étant montée en série avec une capacité ( 23 ) respective de séparation entre les deux lignes ( 3 ) de bus du segment ( 10 ) de ligne de bus correspondant.

4. Système de bus de terrain suivant la revendication 3, dans lequel une diode de suppression est montée directement en parallèle avec au moins l'une des bobines ( 21, 22 ) du transformateur ( 20 ).

5. Système de bus de terrain suivant l'une des revendications 1 à 4, dans lequel les sources ( 11 ) d'alimentation pour les segments ( 10 ) de lignes de bus sont constituées d'une manière limitée en courant et en tension.

6. Système de bus de terrain suivant l'une des revendications 1 à 5, dans lequel une ou plusieurs des sources ( 11 ) d'alimentation sont couplées respectivement par une inductance ( 30 ) de découplage avec chacune des lignes de bus du segment ( 10 ) de ligne de bus correspondant.

7. Système de bus de terrain suivant l'une des revendications 1 à 6, dans lequel les segments ( 10 ) de ligne de bus sont disposés au moins en partie dans une zone en danger d'explosion, les sources ( 11 ) d'alimentation des segments ( 10 ) de ligne de bus étant disposées à l'extérieur de la zone en danger d'explosion.

8. Système de bus de terrain suivant l'une des revendications 1 à 7, dans lequel au moins l'un des segments ( 10 ) de ligne de bus est relié par un segment ( 14 ) de liaison à un appareil ( 2 ) de commande pour effectuer une communication avec des appareils ( 4 ) de terrain raccordés au segment ( 10 ) de ligne de bus.

9. Système de bus de terrain suivant la revendication 8, dans lequel plusieurs segments ( 10 ) de ligne de bus sont couplés au segment ( 14 ) de liaison par un élément ( 12 ) de séparation respectif.
